# EUROPEAN PATENT APPLICATION

(11) **EP 3 910 517 A1**
(43) Date of publication of application: **17.11.2021**
(21) Application number: 20174397.8
(22) Date of filing: 13.05.2020
(51) Int. Cl.: G06F 30/12, G06F 3/01, G06T 19/00, G06K 9/00, G06F 111/12

(54) **AUGMENTING A THREE-DIMENSIONAL STRUCTURE OF A TECHNICAL IN-FRASTRUCTURE**

(71) Applicant: Siemens Aktiengesellschaft, 80333 München (DE)
(72) Inventor: Dr. MACWILLIAMS, Asa, 82256 Fürstenfeldbruck (DE); Dr. LABISCH, Daniel, 76149 Karlsruhe (DE); DE NUL, Gert, 9300 Aalst (BE); GONZALO, Andoni, 48640 Berango (ES); SUDHARSAN, Nischita, 82031 Grünwald (DE)

(57) **Abstract**

The invention specifies a method for augmenting a three-dimensional structure of a technical infrastructure (1), the method including the steps of:
- Loading (S1) a first data set, the first data set at least partially representing a schematic representation (4) of the technical infrastructure (1),
- loading (S2) a second data set representing a three-dimensional structure of the technical infrastructure (1),
- selecting (S3) at least one first data item of the first data set, the at least one first data item representing at least one functional topology in the three-dimensional structure,
- determining (S4), using a matching algorithm, at least one second data item in the second data set, the at least one second data item corresponding to the at least one first data item,
- determining (S5) at least one technical component (2) of the technical infrastructure (1), the at least one functional topology assigned to the at least one second data item, and
- augmenting (S6), in the three-dimensional structure, the at least one technical component (2).

## Description

### Field of the Invention

The embodiments disclosed herein relate to a method for augmenting a three-dimensional structure of a technical infrastructure, a computer program product and a computer-readable storage medium.

### Background of the Invention

The present practice of inspecting a plant includes the use of a schematic diagram, which serves a user who wishes to obtain more detailed information of the plant, in particular information pertaining to a technical component of a the plant, or, more general, a technical infrastructure. The user may wish to know technical details (e.g. in a piping and instrumentation or P&ID diagram) of the technical component or, first and foremost, localize the technical component represented on the schematic diagram within the technical infrastructure which may be referred to as a three-dimensional "real word" infrastructure or, alternatively as a three-dimensional virtual model of the infrastructure.

Examples of localizing the technical component represented on the schematic diagram within the technical infrastructure may include:
- A user navigating within a process plant using an augmented reality device wishing to localize a specific valve in the real world of the technical infrastructure, the valve being displayed within a P&ID diagram and selected by the user,
- a user navigating within a factory using an augmented reality device wishing to localize a specific machine in the real world of the technical infrastructure, the machine being displayed within a production flow diagram and selected by the user,
- a user navigating within a building using an augmented reality device wishing to localize a specific smoke detector in the real world of the technical infrastructure, the smoke detector being displayed within an existing wiring diagram and selected by the user,
- a user navigating within a railyard using an augmented reality device wishing to localize a specific switch point in the real world of the technical infrastructure, the switch point being displayed within an existing station track diagram and selected by the user,
- a user wishing to localize a circuit breaker in a switching cabinet in the real world of the technical infrastructure, the circuit breaker being displayed within an existing wiring diagram and selected by the user, and
- a user wishing to localize a bus station in the real world of the technical infrastructure, the bus station being displayed within a public transport map and selected by the user.

In the present practice, there are different ways of using schematic representation or maps. However, using such schematic representations in order to navigate and/or localize likewise topics in the three-dimensional infrastructure is cumbersome:
- 2D schematic maps, e.g. P&ID diagrams, wiring diagrams, subway maps etc. They are not to scale, and not 3-dimensional, but are reasonably easy to understand.
- 3D schematic maps, for example, a 3D map of the London underground. These are not to scale, but 3-dimensional and easy to understand.
- 2D to-scale maps. These are geographically accurate, but harder to understand and not 3-dimensional.

In any case, a user can view such a map on a 2D surface and attempt to use this for e.g. navigation. For navigation in 3D space, these maps are, however, not suitable.

### Summary

Accordingly, there is a need to make the interaction with a real-world technical infrastructure or virtual three-dimensional technical infrastructure for a user more intuitive, given a schematic representation of the technical infrastructure.

Embodiments herein generally relate to a method for augmenting a three-dimensional structure of a technical infrastructure.

In one embodiment, the method including the steps of:
- Loading a first data set, the first data set at least partially representing a schematic representation of the technical infrastructure,
- loading a second data set representing a three-dimensional structure of the technical infrastructure,
- selecting at least one first data item of the first data set, the at least one first data item representing at least one functional topology in the three-dimensional structure,
- determining, using a matching algorithm, at least one second data item in the second data set, the at least one second data item corresponding to the at least one first data item,
- determining at least one technical component of the technical infrastructure, the at least one functional topology assigned to the at least one second data item, and
- augmenting, in the three-dimensional structure, the at least one technical component.

According to the embodiments a functional topology is augmented in a three-dimensional structure of a technical infrastructure, wherein the functional topology is determined by matching first data items of a schematic representation of the technical infrastructure to second data items of the three-dimensional structure.

The method has the advantage that augmenting the at least one functional topology in the three-dimensional structure is a new type of visualization which is very intuitive and makes use of existing schematic representations, e.g. diagrams that users may be familiar with.

The method takes advantage of the projective properties, like local continuity and locally low distance distortion, of schematic representations, e.g. 2D schematic diagrams to create smooth movements in 3D space (three-dimensional structure of the technical infrastructure).

A further advantage of the method is that by supporting rapid feedback between 2D schematic representations / visualiza-tions and 3D -movement (e.g. the movement of a user in a real-world technical infrastructure or a virtual technical infrastructure), it takes advantage of the link between users' visual and kinesthetic senses, facilitating learning and understanding.

A further advantage of the method is that it can easily be implanted using today's augmented reality and virtual reality hardware, and existing 2D and 3D maps.

According to a further embodiment using the matching algorithm includes the steps of:
- Determining at least one first identifier of the at least one first data item,
- matching the at least one first identifier to at least one second identifier of the at least one second data item, and
- outputting the at least one second data item.

The matching algorithm matches a given position (or set of positions) of the at least one first data item from the schematic representation to a corresponding position (or set of positions) of the at least on second data item on the three-dimensional structure of the technical infrastructure. This has the advantage that for given second data items corresponding first data items are determined.

The use of the first identifier and the second identifier has the advantage that corresponding first data items and second data items can be clearly identified.

According to a further embodiment the matching algorithm applying a string-matching operation, an identifier-matching operation, and/or a distance function. This is of particular advantage if the first identifier and second identifier are slightly different (e.g. Y02004 vs. YS1 02004). An appropriate string-matching algorithm may be used and match the first identifier and the second identifier, e.g. using a distance function or a lookup table based on some database.

According to a further embodiment augmenting the at least one functional topology includes the steps of:
- Computing an aggregate position in the three-dimensional structure, the aggregate position assigned to the at least one second data item and
- displaying an augmentation depending on the aggregate position.

The aggregate position is computed of the at least one second data item. The aggregate position can be displayed e.g. as a bounding box, a weighted average, an ellipsoid, or a group of individual highlights.

According to a further embodiment the augmentation comprises an ellipsoid, a group of individual highlights and/or a bounding box, and/or a superimposed object.

The superimposed object can be placed over the camera view of an augmented reality device. The functional topography / superimposed object can also point to a location of the at least one technical component and can be shown with an automatic camera flight for a virtual reality device.

The superimposed object can be one or multiple navigation arrows lines, circles, stars, text, numbers and/or a navigation route.

The augmentation can be supported by a voice output giving e.g. navigational information, technical explanations, technical details describing the at least on technical component.

According to a further embodiment the aggregate position is a weighted aggregate position. This is of particular advantage if the at least one first data item includes more than one first data item. A weighted aggregate position in the schematic representation can be calculated, the aggregate position assigned to the at least one second data item.

The weighted aggregate position can be used for displaying an augmentation in the three-dimensional structure at the at least one functional topology depending on the aggregate position. The weighted aggregate position can be displayed e.g. as a bounding box, a weighted average, an ellipsoid, or a group of weighted individual highlights.

According to a further embodiment the schematic representation is a diagram, a schematic map, a container for two-dimensional information, a container for three-dimensional information, a bitmap and/or a vector image. This has the advantage that the method can takes advantage of the link between users' visual and kinesthetic senses, facilitating learning and understanding.

According to a further embodiment the three-dimensional structure is a real-world representation of the technical infrastructure or a virtual representation of the technical infrastructure. This has the advantage that the method can easily be implanted using today's augmented reality and virtual reality hardware, and existing 2D and 3D maps.

According to a further embodiment the technical infrastructure is a chemical plant, a production plant, an industrial plant, an energy plant, a logistics facility, a warehouse, traffic infrastructure, and/or a factory environment. This has the advantage that the method can be used in different technical environments.

According to a further embodiment a weighted average of the at least one first data item is computed. This is of particular advantage if the at least one first data item includes more than one first data item. For example, all first data items that are within a certain distance of a selection of a user on the schematic representation could be included in the calculation of the weighted average; and a weight based on how close the first data items are to the selection could be assigned. The result might be 70% YS1 02004 (first identifier a) and 30% YS1 02003 (first identifier b).

According to a further embodiment results of the matching algorithm comprise a confidence value and/or a relevance value. This is of particular advantage if the at least one first data item includes more than one first data item.

According to a further embodiment for selecting at least one first data item a technical device is used. The technical device being a smartphone, a tablet, a device comprising an augmented reality software, a device comprising a virtual reality software, an augmented reality headset, a virtual reality headset, a computer comprising an augmented reality software, and/or a computer comprising a virtual reality software.

According to a further embodiment the first data set includes positional data representing a position within the technical infrastructure, an identifier of the at least one technical component, a location on a map, an area on a map, a specific device, and/or a specific technical component.

According to a further embodiment a computer program product comprising instructions which, when the program is executed by a computational device, cause the computational device to carry out the claimed method is provided.

According to a further embodiment a computer-readable storage medium comprising instructions which, when executed by a computational device, cause the computational device to carry out the claimed method is provided.

There are different ways of pre-processing the 2D map to create a list of 2D component coordinates and identifiers. For example, if the map is generated from a database, the same database can be used to generate the coordinates. If the map is a vector graphics format (e.g. a PDF or SVG document), a parser can extract text labels and their positions within the document. If the map is a pre-existing raster image, e.g. a scan of a paper document, an OCR algorithm can find 2D map identifiers and their positions on the 2D map.

Since the method computes the functional topology and the aggregate position in the three-dimensional structure based on weighted averages and confidence values, when the user moves smoothly on the schematic representation, the aggregate position in the three-dimensional structure will move mostly smoothly in 3D space as well.

Why "smooth"? This is because the projection of the schematic representation (2D space) onto the three-dimensional structure (3D space) generally designed to be locally continuous. This means that, within certain areas of the map, components that are close together in 2D space are also close together in 3D space, and vice versa.

Why "mostly"? The projection of the schematic representation (2D space) onto the three-dimensional structure (3D space) is very likely to be globally discontinuous, and not distance-preserving everywhere, since it is not simply a perspective projection. Thus, within certain areas of the schematic representation (2D space), e.g. technical components 2 that are close together in the three-dimensional structure (3D space) are actually very far apart on the schematic representation (2D space), and vice versa. In those areas, a smooth movement in 2D will cause a jump in 3D.

### Brief Description of the Drawings

- Fig. 1: shows a flow diagram of the claimed method,
- Fig. 2: shows a schematic representation and a corresponding three-dimensional structure of a technical infrastructure, and
- Fig. 3: shows a selection on the schematic representation and an augmentation on the three-dimensional structure of the technical infrastructure.

### Detailed Description of the Drawings

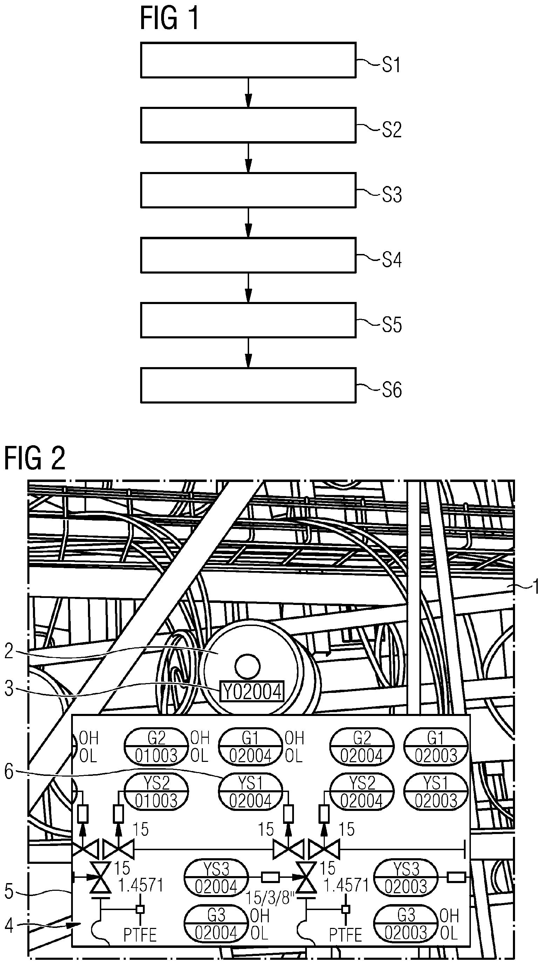

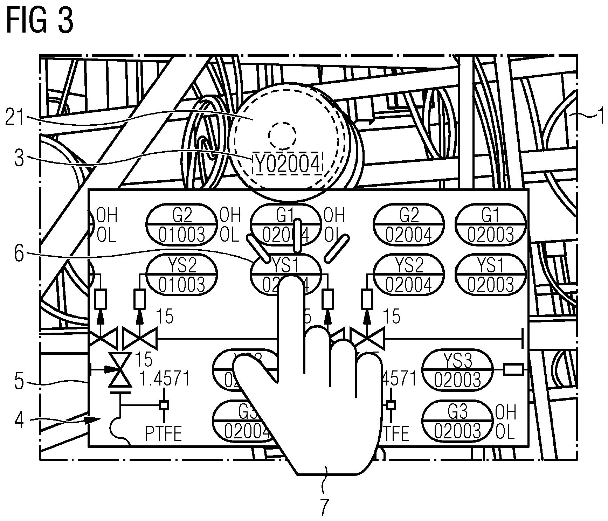

Fig. 1 shows a flow diagram of a method for augmenting a three-dimensional structure of a technical infrastructure 1 (shown in Fig. 2 and 3).

The method includes the steps of:
- Loading S1 a first data set, the first data set at least partially representing a schematic representation 4 (shown in Fig. 2 and 3) of the technical infrastructure 1,
- loading S2 a second data set representing a three-dimensional structure of the technical infrastructure 1,
- selecting S3 at least one first data item of the first data set, the at least one first data item representing at least one functional topology in the three-dimensional structure,
- determining S4, using a matching algorithm, at least one second data item in the second data set, the at least one second data item corresponding to the at least one first data item,
- determining S5 at least one technical component 2 (shown in Fig. 2 and 3) of the technical infrastructure 1, the at least one functional topology assigned to the at least one second data item, and
- augmenting S6, in the three-dimensional structure, the at least one technical component 2.

Fig. 2 shows a real-world view / three-dimensional structure of a technical infrastructure 1 with a technical component 2, and a second identifier 3 on the technical component 2.

Fig. 2 further shows a first data set representing a schematic representation 4, e.g. a piping and instrumentation (P&ID) diagram of the technical infrastructure 1 shown in the three-dimensional structure above. The schematic representation 4 is shown on a technical device, e.g. an augmented reality device, e.g. a tablet. The schematic representation 4 comprises first identifiers 6, e.g, the first identifier 6 "YS1 02004".

The augmented reality device / technical device 5 displays the schematic representation 4 of the technical infrastructure 1 in the area of the technical component 2 labelled with the second identifier 3 "Y02004" (labelled with the corresponding first identifier 6 "YS1 02004" in the schematic representation 4).

The schematic representation 4 is a functional topology, especially a close-up of an existing piping and instrumentation (P&ID) diagram loaded by the augmented reality device / technical device 5, zoomed in to show the parts of the schematic representation 4 matching the technical component 2 labelled with the second identifier 3 "Y02004" in view and its surrounding.

Fig. 3 shows the same elements as Fig. 2. Additionally, to Fig. 2, Fig. 3 shows a selection 7 (selecting S3 at least one first data item of the first data set) e.g. by a user of a part of the schematic representation 4, the part representing the first data item. Fig. 3 further shows an augmentation 21 on the technical component 3.

In an advantageous embodiment, the selection 7 is done by a user. In Fig. 3 an area around the technical component 3 with the first identifier 6 "YS1 02004", which corresponds to the first data item is selected through the selection 7.

A first data set, the first data set at least partially representing a schematic representation 4 of the technical infrastructure 1, is loaded S1 (shown in Fig. 1), before or after the selection 7 of a first data item.

A second data set representing a three-dimensional structure of the technical infrastructure (1), is loaded S2 (shown in Fig. 1), before or after the selection 7 of a first data item.

Then at least one second data item is determined in the second data set S4 (shown in Fig. 1) using a matching algorithm. The at least one second data item corresponds to the at least one first data item.

Then at least one functional topology is determined in the three-dimensional structure S5 (shown in Fig. 1). The at least one functional topology is assigned to the at least one second data item.

Then the at least one functional topology is augmented in the three-dimensional structure S6 (shown in Fig. 1) e.g. by an augmentation 21. The augmentation 21 is augmenting the technical component 3 corresponding to the section 6 on the schematic representation 4.

Although the invention has been explained in relation to its advantageous embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

- 1: technical infrastructure
- 2: technical component
- 3: second identifier 2
- 4: schematic representation
- 5: technical device
- 6: first identifier
- 7: selection
- 21: augmentation

- Si: Step i

## Claims

1. A method for augmenting a three-dimensional structure of a technical infrastructure (1), the method including the steps of:
- Loading (S1) a first data set, the first data set at least partially representing a schematic representation (4) of the technical infrastructure (1),
- loading (S2) a second data set representing a three-dimensional structure of the technical infrastructure (1),
- selecting (S3) at least one first data item of the first data set, the at least one first data item representing at least one functional topology in the three-dimensional structure,
- determining (S4), using a matching algorithm, at least one second data item in the second data set, the at least one second data item corresponding to the at least one first data item,
- determining (S5) at least one technical component (2) of the technical infrastructure (1), the at least one functional topology assigned to the at least one second data item, and
- augmenting (S6), in the three-dimensional structure, the at least one technical component (2).

2. Method according to claim 1,
wherein using the matching algorithm includes the steps of:
- Determining at least one first identifier (6) of the at least one first data item,
- matching the at least one first identifier (6) to at least one second identifier (3) of the at least one second data item, and
- outputting the at least one second data item.

3. Method according to one of the previous claims,
the matching algorithm applying a string-matching operation, an identifier-matching operation, and/or a distance function.

4. Method according to one of the previous claims,
wherein augmenting the at least one functional topology includes the steps of:
- Computing an aggregate position in the three-dimensional structure, the aggregate position assigned to the at least one second data item and
- displaying an augmentation (21) depending on the aggregate position.

5. Method according to claim 4,
wherein the augmentation (21) comprises an ellipsoid, a group of individual highlights and/or a bounding box, and/or a superimposed object.

6. Method according to claim 4 or claim 5,
wherein the aggregate position is a weighted aggregate position.

7. Method according to one of the previous claims,
wherein the schematic representation (4) is a diagram, a schematic map, a container for two-dimensional information, a container for three-dimensional information, a bitmap and/or a vector image.

8. Method according to one of the previous claims,
wherein the three-dimensional structure is a real-world representation of the technical infrastructure (1) or a virtual representation of the technical infrastructure (1).

9. Method according to one of the previous claims,
wherein the technical infrastructure (1) is a chemical plant, a production plant, an industrial plant, an energy plant, a logistics facility, a warehouse, traffic infrastructure, and/or a factory environment.

10. Method according to one of the previous claims,
wherein a weighted average of the at least one first data item is computed.

11. Method according to one of the previous claims,
wherein results of the matching algorithm comprise a confidence value and/or a relevance value.

12. Method according to one of the previous claims,
wherein for selecting at least one first data item a technical device (5) is used, the technical device (5) being:
- a smartphone,
- a tablet,
- a device comprising an augmented reality software,
- a device comprising a virtual reality software,
- an augmented reality headset,
- a virtual reality headset,
- a computer comprising an augmented reality software, and/or
- a computer comprising a virtual reality software.

13. Method according to one of the previous claims,
wherein the first data set includes:
- Positional data representing a position within the technical infrastructure (1),
- an identifier of the at least one technical component (2),
- a location on a map,
- an area on a map,
- a specific device, and/or
- a specific technical component.

14. Computer program product comprising instructions which, when the program is executed by a computational device, cause the computational device to carry out a method according to one of the claims 1 to 13.

15. Computer-readable storage medium comprising instructions which, when executed by a computational device, cause the computational device to carry out a method according to one of the claims 1 to 13.
